# FASCICULE DE BREVET EUROPEEN

(11) **EP 2 776 540 B1**
(45) Date de publication et mention de la délivrance du brevet: **05.12.2018**
(21) Numéro de dépôt: 12783221.0
(22) Date de dépôt: 08.11.2012
(51) Int. Cl.: C10L 9/08, B01J 8/12

(54) **REACTEUR DE SECHAGE ET DE TORREFACTION DE BIOMASSE, DE PREFERENCE LIGNO-CELLULOSIQUE**
REAKTOR ZUR TROCKNUNG UND TORREFIZIERUNG EINER BIOMASSE, VORZUGSWEISE EINER LIGNOCELLULOSE- BIOMASSE
REACTOR FOR DRYING AND TORREFYING A BIOMASS, PREFERABLY A LIGNOCELLULOSE BIOMASS

(30) Priorité: 09.11.2011 FR 1160205
(43) Date de publication de la demande: 17.09.2014
(73) Titulaire: Commissariat à l'Énergie Atomique et aux Énergies Alternatives, 75015 Paris (FR)
(72) Inventeur: MARTY, Charlotte, F-38410 Saint Martin d'Uriage (FR); CHATAING, Thierry, F-38250 Lans-en-Vercors (FR)
(74) Mandataire: Ahner, Philippe
(86) Numéro de dépôt international: PCT/EP2012/072163
(87) Numéro de publication internationale: WO 2013/068480

(56) Documents cités:
- DE-A1- 19 941 497
- US-A- 3 742 735
- US-A1- 2010 242 351

## Description

### DOMAINE TECHNIQUE

L'invention concerne un nouveau réacteur de séchage et de torréfaction de biomasse, de préférence ligno-cellulosique.

### ART ANTÉRIEUR

Dans un contexte où la consommation ne cesse d'augmenter, la valorisation de la biomasse est envisagée afin de diversifier les ressources d'énergies. Les filières de conversion thermique par gazéification et combustion sont particulièrement envisagées.

La torréfaction de la biomasse de préférence lignocellulosique, est une étape de prétraitement de la biomasse en vue de son injection sous forme pulvérisée dans un réacteur à flux entraîné (réacteur de gazéification) ou dans un réacteur dit de co-combustion biomasse et charbon dans une centrale thermique à charbon. En effet, la structure fibreuse et élastique de la biomasse rend sa micronisation énergivore et confère au produit broyé des caractéristiques inadaptées à une injection sous forme pulvérisée. La torréfaction est un traitement thermique doux de la biomasse à l'interface entre le séchage et la pyrolyse, généralement réalisé à des températures comprises entre 200 et 300°C et qui vise à éliminer l'eau et à modifier une partie de la matière organique de la biomasse pour casser ses fibres. Autrement dit, ce traitement thermique doux altère la structure fibreuse de la biomasse, facilitant ainsi par la suite son broyage et son injection en réacteur de gazéification ou de co-combustion.

Le prétraitement par torréfaction améliore également les propriétés de la biomasse en vue de son stockage en lui conférant notamment un caractère hydrophobe et une résistance aux dégradations biologiques. La granulation est également une application possible après torréfaction de la matière.

Comme indiqué ci-dessus, la diversification des ressources énergétiques étant devenue un enjeu majeur, il est important de valoriser au maximum les ressources de biomasses disponibles, et cela concerne en particulier celles situées en zones géographiquement isolées. Cependant, les exploitants forestiers et agricoles se heurtent à l'heure actuelle à des problèmes concernant le stockage de la biomasse, du fait de son caractère hydrophile et biodégradable. De plus, les coûts liés aux transports de la matière ne sont généralement pas négligeables.

Il n'existe à ce jour pas de procédé permettant de réaliser un prétraitement de la biomasse par torréfaction dans les zones géographiquement isolées, où la ressource est abondante. Le développement d'une unité transportable permettrait le traitement décentralisé de biomasse afin d'en améliorer le stockage sur site et le transport ultérieur.

Plusieurs technologies de torréfaction connues permettent de torréfier de la biomasse ligno-cellulosique mais celles-ci ne sont pas nécessairement industrialisées/industrialisables. On peut notamment citer les fours rotatifs, les fours à étages, les fours à bandes, les fours à vis ou lit fluidisés.

Cependant, les technologies existantes de torréfactions font face à un certain nombre de problèmes, et notamment à des difficultés de :
- traitement des fumées : cette étape, qui combine la gestion des effluents liés à l'humidité naturelle du matériau à traiter et la gestion des effluents liés aux réactions de torréfaction, est souvent coûteuse et impact l'économie globale du procédé,
- uniformité du traitement thermique sur la biomasse : une mauvaise homogénéité de la température dans le four et des faibles échanges thermiques peuvent conduire à une inhomogénéité du traitement thermique inter et intra-particules.

Il semble admis que pourvoir utiliser un réacteur de torréfaction en tant qu'unité transportable jusqu'à des zones isolées géographiquement, il est nécessaire de réaliser un réacteur avec une zone de séchage et de torréfaction dans une même chambre du réacteur.

La demande EP 2 189 512 A1 divulgue un réacteur de séchage et de torréfaction de biomasse de type four à étages dans lequel les premiers étages (1 à N-1) servent au séchage poussé de la biomasse tandis qu'un étage unique N sert uniquement à toute l'étape de torréfaction proprement dite et les étages en aval N+1 à N₀ servent à un refroidissement par brumisation de la biomasse séchée et torréfiée. La solution selon cette demande permet donc un traitement étagé des effluents puisque la vapeur issue du séchage du bois peut être extraite au niveau de l'étage N-1 et les fumées dégagées par la torréfaction peuvent être extraites au niveau de l'étage N.

En outre, le contrôle des paramètres (température, temps de séjour) de torréfaction est assuré d'une part par des analyses de gaz en ligne à différents étages du four et d'autre part, par la détection à l'aide d'un pyromètre des réactions d'exothermiques, représentative d'un certain état de l'avancement de la torréfaction. Les analyses de gaz présentent l'inconvénient majeur de nécessiter des équipements coûteux et difficiles à mettre en place.

La phase de détection s'appuie quant à elle sur des simulations numériques dont les résultats sont à considérer avec précaution du fait que les réactions intra-particules intervenant durant la torréfaction sont encore mal connus et qu'ils peuvent différer d'une essence à l'autre.

De plus, selon cette demande de brevet toute la torréfaction est prévue sur un seul étage du four, ce qui présente des risques au niveau de l'homogénéité du traitement thermique, le brassage n'étant pas nécessairement assuré uniformément sur un seul étage dans ce type de four.

Enfin, l'optimisation énergétique n'est pas prise en compte et l'utilisation de brumisateurs dans les derniers étages du four présente des inconvénients en termes de coût énergétique (une partie de l'eau brumisée va se vaporiser) et de traitement des effluents puisque il y a une fraction de vapeur supplémentaire à traiter.

La demande de brevet US 2010/0083530A1 propose un procédé de torréfaction dans un four à étages, dans lequel il est prévu de réaliser le séchage en haut du four et la torréfaction en bas du four. Il est prévu dans cette demande de brevet de réutiliser de la vapeur, produite par le séchage de la matière humide, afin d'assurer l'apport de chaleur dans le four et de rendre l'atmosphère inerte dans la chambre du four. Les fumées dans la chambre contenant la vapeur d'eau sont extraites du four en partie haute en un ou plusieurs points. Une partie de celles-ci peut être condensée et une partie est surchauffée dans un échangeur de chaleur avant d'être réinjectée à un ou plusieurs niveaux dans le réacteur. L'énergie est apportée à l'échangeur de chaleur grâce aux fumées non condensées à la sortie du condenseur et passant à travers un brûleur alimenté en combustible d'appoint.

Bien que cette solution propose des améliorations de contrôle du procédé et de traitement des effluents, elle présente toutefois plusieurs inconvénients comme suit.

D'une part, la concentration des fumées recyclées dans le four en eau et en matières volatiles est très dépendante de la nature du bois ainsi que de son humidité de base. Afin de gérer les quantités de gaz à recycler dans le four ou à envoyer vers le condenseur, dans le but de limiter la concentration des matières volatiles dans la chambre du four, des analyses de composition des gaz en ligne sont nécessaires, ce qui implique des difficultés de mise en oeuvre et des coûts importants.

D'autre part, le traitement des effluents peut être coûteux du fait de la condensation d'une partie des fumées : les effluents condensés, contenant des matières volatiles acides, peuvent nécessiter un traitement avant rejet selon la réglementation en vigueur.

En outre, la condensation des matières volatiles est une perte énergétique : leur pouvoir calorifique n'est pas valorisé.

De plus, la vapeur d'eau peut provoquer des réactions d'hydro-thermolyse du bois, ce qui a un impact sur la torréfaction et la perte de masse. Ces réactions sont mal connues et dépendent de la nature du bois, ce qui complexifie d'autant plus le contrôle de la qualité du produit.

De plus encore, un arrosage des particules de biomasse en bas du four est envisagé, par injection d'un liquide tel que de l'eau. Cependant, l'injection d'eau sous forme liquide peut provoquer des problèmes conséquents de corrosion dans le four et peut également engendrer une perte d'énergie.

Enfin, la circulation des gaz à contre-courant de la biomasse solide qui elle va de haut en bas présente le risque que des matières volatiles et de la vapeur d'eau se condensent au niveau du plateau du réacteur le plus en amont par contact avec la matière froide injectée dans le four. US2010/0242351 décrit un réacteur de torréfaction avec échangeur de chaleur.

Le but de l'invention est donc de proposer un réacteur de séchage et de torréfaction de la biomasse qui pallie tout ou partie des inconvénients de l'art antérieur précité et qui, le cas échéant puisse être utilisé en tant qu'unité transportable jusqu'à des zones géographiquement isolées.

Un but particulier de l'invention est de proposer un réacteur de séchage et de torréfaction de la biomasse qui s'affranchisse des difficultés de traitement des effluents (fumées) et d'uniformité de traitement thermique sur la biomasse des technologies de torréfaction actuellement existantes.

Un autre but de l'invention est de proposer un réacteur de séchage et de torréfaction de la biomasse qui puisse être utilisée en tant qu'unité transportable avec des dimensions respectant les normes européennes de transport applicables aux camions semi-remorques, c'est-à-dire avec un diamètre maximal de 2,55 m et une hauteur maximale de 4,30 m.

### EXPOSÉ DE L'INVENTION

Pour ce faire, l'invention concerne un réacteur de séchage et torréfaction, destiné à la torréfaction de biomasse, comprenant une chambre à l'intérieur de laquelle sont délimitées deux zones distinctes et des moyens pour brasser et transférer de la biomasse d'une extrémité à l'autre de la chambre, la zone amont de la chambre comprenant des moyens de séchage aptes à réaliser le séchage de la biomasse introduite dans le réacteur, la zone aval de la chambre comprenant des moyens de torréfaction aptes à réaliser la torréfaction de la biomasse séchée dans la zone amont selon la revendication 1.

Selon l'invention, le réacteur comprend un système de transfert et d'étanchéité apte à permettre le transfert de la biomasse séchée de la zone amont à la zone aval à intervalles de temps et à rendre étanche les deux zones entre elles pendant chaque intervalle.

Par biomasse, on entend le sens usuel à savoir l'ensemble de la matière organique d'origine végétale ou animale. En particulier, la biomasse peut être de type ligno-cellulosique, telle que le bois et les matières agricoles et présenter n'importe quel taux d'humidité, de préférence comprenant entre 10 et 60% d'eau, et être introduite dans le réacteur selon l'invention sous toutes formes variées telle que plaquettes, granulés,....

Selon l'invention, le réacteur comprend également des moyens de chauffage au niveau de sa zone de torréfaction et/ou de sa zone de séchage.

Dans la zone amont (zone de séchage), la température peut être comprise entre 100 et 300°C, et plus particulièrement entre 100 et 200°C. En effet, au dessus de 200°C les réactions qui ont lieu ne sont plus uniquement des réactions de séchage, et le risque augmente de voir la concentration de goudrons augmenter dans les effluents produits dans cette zone.

Dans la zone aval (zone de torréfaction), la température est comprise entre 200 et 300°C. La température est plus préférablement comprise entre 250 et 300°C pour de la biomasse type bois et entre 220 et 280°C pour de la biomasse de type agricole. En effet, le bois réagit à des températures plus élevées que les biomasses agricoles.

Telle que définie, l'invention permet à la fois un traitement uniforme de la biomasse grâce à une optimisation des échanges thermiques et un traitement optimisé des effluents liés à la torréfaction.

On peut en outre envisager d'utiliser le réacteur selon l'invention en tant qu'unité transportable jusqu'à des zones géographiquement isolées permettant le traitement thermique de biomasse, de préférence ligno-cellulosique, à des températures comprises entre 200 et 300°C, sous atmosphère réduite en oxygène.

Les moyens de chauffage comprennent un ou plusieurs caloducs.

Le réacteur selon l'invention définit deux zones de traitement distinctes et étanches l'une par rapport à l'autre, vis-à-vis des gaz, ce qui permet à la fois de :
- traiter la biomasse de façon étagée en réalisant une première étape de séchage et une seconde étape de torréfaction,
- faciliter la maitrise de la température de traitement entre les deux zones du réacteur, le séchage étant généralement réalisé à une température inférieure à celle de la torréfaction,
- réaliser un traitement dans une configuration différente de co- ou contre-courant entre le gaz et la biomasse solide selon la zone du réacteur et ainsi contrôler la nature de l'atmosphère gazeuse en contact avec la biomasse. En effet, la circulation à l'air ou sous vapeur d'eau en contre-courant en zone de séchage (zone amont) permet d'optimiser les échanges thermiques. Il est préférable par contre de réaliser une circulation en co-courant dans la zone de torréfaction (zone aval). En effet, dans cette zone aval, une circulation à contre-courant présente des risques d'une part de condensation des matières volatiles (goudrons, acides...) sur la biomasse entrant dans la zone de torréfaction à la température de la zone de séchage et d'autre part, de réactions entre la phase condensée (chargée en goudrons, acides...) et la biomasse solide du fait de la nature de l'atmosphère gazeuse et la présence d'acides qui peuvent avoir un impact sur les réactions de torréfaction avec pour résultat en une perte de contrôle de la qualité de la torréfaction. La torréfaction peut être réalisée avantageusement sous atmosphère inerte composée de gaz tels que des gaz de combustion (N₂, CO₂, H₂O...). Ainsi, le système de transfert et d'étanchéité selon l'invention implanté dans un réacteur permet de faire circuler les gaz en contre-courant en zone de séchage et en co-courant en zone de torréfaction,
- faciliter la gestion des effluents et le rendement thermique du procédé : grâce à la séparation des zones de séchage et de torréfaction, la vapeur dégagée par le séchage de la biomasse n'est pas « polluée » par les composés volatils dégagés de la biomasse durant la torréfaction et est donc plus facile à traiter. Ainsi, la vapeur dégagée en partie séchage n'a pas besoin d'être envoyée vers une zone de post-traitement. Ceci permet d'éviter une consommation d'énergie liée au chauffage de la vapeur à la température de la zone de postcombustion.

Le réacteur selon l'invention est constitué d'un four à étages avec chaque étage i défini par un plateau fixe (Pi) dans lequel est pratiquée au moins une ouverture, dite ouverture de transfert, les moyens de brassage et de transfert de la biomasse étant constitués par une pluralité de bras munis de pâles aptes à brasser et déplacer la biomasse sur chaque plateau fixe selon une trajectoire en spirales jusqu'à l'ouverture de transfert à travers laquelle la biomasse peut s'écouler par gravité. La distance entre deux plateaux fixes consécutifs est de préférence comprise entre 200 et 700 mm. Les moyens de chauffage sont adaptés pour chauffer de manière homogène le plateau (isotherme de température). La présence de caloduc permet d'obtenir un traitement homogène du plateau offrant ainsi la maîtrise de la température et du temps de séjour.

Le contrôle de la température de torréfaction de la biomasse est un paramètre très important : la variation de la température a un impact fort sur la perte de masse du solide. Les échanges thermiques avec le lit de particules sont assurés par les phénomènes de convection, conduction et rayonnement avec les gaz, les parois et les plateaux. Afin d'assurer un contrôle fin de la température et de l'homogénéiser dans la zone de torréfaction, une entrée permettant d'injecter une partie des gaz de torréfaction recyclés se situe à chaque étage du four.

L'entrée est couplée à un système d'optimisation des échanges thermiques. Ce dernier est composé d'un élément conducteur de chaleur reliant la paroi du four et la sole du four, qui est chauffée par les gaz chaud arrivant par l'entrée située à chaque étage et qui diffuse cette chaleur au vers le centre du four. Avantageusement, l'élément conducteur de chaleur peut être un caloduc, ceux-ci offrant une conductivité thermique plus élevée (20 à 100 fois) que les métaux usuels et améliorant ainsi les échanges dans le four par conduction, convection et rayonnement. Un ou plusieurs caloducs peuvent être positionnés au niveau de chaque plateau.

Ainsi, le réacteur comprend avantageusement au moins un élément caloduc maintenu à l'intérieur d'une gorge en forme de V pratiquée dans au moins un plateau fixe définissant un étage.

Autrement dit, la température des gaz et des plateaux est précisément maîtrisée et les échanges thermique avec le lit de particules sont contrôlés et optimisés (maximisation de la surface d'échange).

Ceci permet notamment de diminuer les temps de séjour dans le four, généralement compris en torréfaction entre 20 et 90 min. Ainsi grâce à l'invention, les temps de séjour peuvent être diminués jusqu'à une valeur de 10 à 30 min grâce à une augmentation maîtrisée de la température couplée à une optimisation des échanges de chaleur. En effet, le couple temps de séjour/température conditionne la perte de masse du solide et le niveau de dégradation des composés de la biomasse. Une augmentation de la température permet de diminuer le temps de séjour.

Lorsqu'on réalise une alimentation en biomasse en continu, il est également nécessaire d'avoir des échanges de chaleur optimisés pour que le traitement thermique reste homogène dans une utilisation à haute température et faible temps de séjour.

Les matériaux constituant tous les composants du four selon l'invention peuvent être de type céramique, métaux ou autres. Un matériau permet également d'assurer l'isolation au niveau de l'enveloppe extérieure du four.

Dans le cas où on utilise le réacteur selon l'invention en tant qu'installation fixe, il est avantageusement choisi d'utiliser des matériaux céramiques qui présentent l'intérêt majeur de résister à la corrosion notamment liée aux acides dégagés durant la torréfaction.

Lorsqu'on utilise le réacteur selon l'invention en tant qu'unité transportable, il est important de prendre en compte des contraintes liées au poids, afin que celui-ci puisse être transporté sur une semi-remorque et de préférence en respectant les normes européennes relatives. Il est donc avantageux de privilégier ici des alliages métalliques. De même, pour une unité transportable il faut qu'elle soit conçue pour supporter des arrêts et redémarrage fréquents (i.e. résistance face aux cycles thermiques). Lorsque l'on arrête le four, il y a un risque de condensation des fumées de torréfaction et donc de corrosion de la taule métallique par les acides formés durant la torréfaction. Pour éviter cela, avantageusement, on réaliser un balayage à l'aide de gaz chauds lorsque l'on arrête l'alimentation du four en biomasse. On peut également prévoir des zones de condensation et de récupération de la fraction condensée. Ainsi on peut prévoir d'implanter des rigoles en céramique, ou en autre matière non corrosive, en périphérie des plateaux du four dans la zone de torréfaction où les liquides se condensent lors du refroidissement. Un robinet de sortie, notamment dans la partie séchage du four où il y a beaucoup d'eau liée à l'humidité du bois, permet ensuite d'évacuer les effluents condensés dans l'enceinte.

Le réacteur selon l'invention est un four de type à étages, le plateau fixe Pi est avantageusement constitué de deux plaques superposées l'une sur l'autre et distantes l'une de l'autre par une entretoise en forme de V dont l'intérieur constitue la gorge.

Selon un mode de réalisation particulièrement avantageux, le système de transfert et d'étanchéité est une écluse rotative comprenant :
- un plateau amont, monté fixe dans la chambre et disposé en extrémité inférieure de la zone amont, et comprenant au moins une ouverture, dite ouverture de transfert ;
- un plateau aval, monté fixe sur un arbre lui-même monté rotatif dans la chambre et disposé en extrémité supérieure de la zone aval, et comprenant également au moins une ouverture, dite ouverture de transfert ;
dans laquelle une ouverture de transfert du plateau amont est apte à être en regard d'une ouverture de transfert du plateau aval à intervalles de temps en fonction de la vitesse de rotation de l'arbre rotatif.

De préférence, la distance selon la hauteur de la chambre entre plateau amont et plateau aval est comprise entre 1 et 5 mm. Cette distance dépend bien évidemment du type de biomasse et typiquement pour de la biomasse de type paille on augmente cette distance de sorte à ce qu'elle soit égale au minimum à 6 mm.

De préférence encore, les plateaux amont et aval ont le même nombre d'ouvertures de transfert, celles-ci étant toutes avec celles du plateau amont agencées sensiblement à l'aplomb de celles du plateau aval.

L'invention concerne également une installation de traitement de biomasse comprenant un réacteur tel que décrit ci-dessus, caractérisée en ce qu'elle comprend un premier circuit de fluides avec des moyens pour respectivement injecter de l'air ou vapeur d'eau en extrémité inférieure de la zone amont, faire circuler l'air ou la vapeur d'eau injectée en contre-courant de la biomasse dans la zone amont, la récupérer à son extrémité supérieure, et la rejeter à l'atmosphère .

Avantageusement, les moyens comprennent au moins une ouverture, dite ouverture d'injection, pratiquée dans la paroi périphérique du réacteur en extrémité inférieure de la zone amont, au moins un ventilateur apte à faire circuler l'air ou la vapeur d'eau injectée en contre-courant de la biomasse dans la zone amont, au moins une ouverture, dite ouverture de rejet, pratiquée dans la paroi périphérique du réacteur en extrémité inférieure de la zone amont.

Afin d'optimiser la gestion des effluents, on peut prévoir de préférence de rendre inerte la chambre du four de torréfaction par le recyclage d'au moins une partie des gaz de torréfaction après que ceux-ci aient subis une étape de combustion. Ceux-ci sont donc extraits en bas du four puis envoyés dans une chambre de combustion, où les matières volatiles sont détruites par combustion et dont la capacité calorifique est valorisée, puis les gaz issus de la combustion sont ensuite réinjectés dans le four après un passage dans un échangeur de chaleur.

La chambre de combustion a donc plusieurs fonctions, à savoir :
o éliminer les matières volatiles produites durant la torréfaction afin de rendre inerte les gaz à recycler dans l'enceinte de torréfaction,
o valoriser la capacité calorifique des matières volatiles produites durant la torréfaction,
o apporter la chaleur dans la chambre du réacteur nécessaire à la torréfaction et au séchage,

En sortie de la chambre de combustion, les fumées sont envoyées vers l'échangeur de chaleur puis une partie au moins est réinjectée sur un ou plusieurs étages du four. Une autre partie peut être rejetés à l'atmosphère, après avoir subit les étapes de traitement adéquats selon la législation en vigueur.

Afin d'apporter l'énergie nécessaire au séchage et à la torréfaction, un appoint de combustible peut être nécessaire au niveau de la chambre de combustion. Ce combustible peut être de type gaz naturel, charbon, biomasse, pétrole ou autre.

Dans le cas où le réacteur selon l'invention est utilisé en tant qu'unité transportable et donc doit être autonome, la chambre de combustion peut comprendre au moins un brûleur multi-combustible et ainsi être alimentée simultanément par un combustible solide d'appoint, par exemple de la biomasse ou du charbon de bois. Ces combustibles solides présentent les avantages d'être facilement stockables (par exemple en silo) et transportables, ce qui permet d'assurer l'indépendance énergétique du réacteur selon l'invention. En tant que brûleur multi combustible susceptible d'être utilisé dans le cadre de l'invention, on peut citer ceux commercialisés par la société Leroux et Lotz Technologie.

L'échangeur de chaleur est quant à lui alimenté d'un coté par les gaz issus de la chambre de combustion, et de l'autre coté par les gaz utilisés pour le séchage de la biomasse en zone amont du réacteur. Les gaz injectés dans la zone de séchage (zone amont) peuvent être de l'air ou de la vapeur d'eau issue du séchage de la biomasse.

Ainsi, l'installation selon l'invention comprend un deuxième circuit fluide avec des moyens pour respectivement récupérer les gaz en extrémité inférieure de la zone aval, faire une combustion des gaz récupérés, ré-injecter au moins une partie des gaz issus de la combustion en extrémité supérieure de la zone aval et faire circuler les gaz en co-courant de la biomasse dans la zone aval.

Avantageusement, les moyens comprennent au moins une ouverture, dite ouverture de récupération, pratiquée dans la paroi périphérique du réacteur en extrémité inférieure de la zone aval, une chambre de combustion distincte de la chambre de réacteur, au moins un ventilateur pour faire circuler les gaz en co-courant de la biomasse dans la zone aval, au moins une ouverture, dite ouverture de ré-injection, pratiquée dans la paroi périphérique de la chambre en extrémité supérieure de la zone aval.

La chambre de combustion comprend avantageusement au moins un brûleur multi-combustible pour brûler simultanément les gaz récupérés en extrémité inférieure de la zone aval et des combustibles de matière solide.

Avec le réacteur de type four à étages, l'installation comprend de préférence, au moins une ouverture de réinjection à chaque étage du four dans la zone aval.

De préférence, pour maîtriser encore mieux les températures, chaque ouverture de réinjection est pratiquée à proximité de chaque caloduc maintenu dans un plateau fixe.

L'installation comprend avantageusement un échangeur de chaleur pour permettre le chauffage du premier circuit de fluide par le deuxième circuit de fluide.

L'invention concerne également un procédé de séchage et de torréfaction de biomasse selon lequel on réalise un séchage de la biomasse dans une zone amont d'une chambre de réacteur et on réalise un transfert de la biomasse séchée dans la zone amont vers une zone en aval de la zone amont de la chambre du même réacteur puis on réalise la torréfaction de la biomasse séchée et transférée dans ladite zone aval, le procédé comprenant la réalisation d'un transfert de la biomasse séchée de la zone amont à la zone aval à intervalles de temps et la réalisation d'une étanchéification d'une zone par rapport à l'autre pendant chaque intervalle de temps.

Avantageusement, on réalise, dans la zone amont, une circulation de vapeur d'eau ou d'air à contre-courant de la biomasse et simultanément, dans la zone aval, une circulation de gaz issus de la combustion des gaz récupérés dans cette même zone aval à co-courant de la biomasse.

Avantageusement encore, lorsqu'on interrompt l'alimentation du réacteur en biomasse, on continue à faire une circulation des gaz issus de la combustion dans la zone aval.

L'invention concerne enfin l'application du réacteur ou du procédé à la torréfaction de la biomasse ligno-cellulosique.

### BRÈVE DESCRIPTION DES DESSINS

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique en coupe longitudinale d'un réacteur de séchage et de torréfaction de biomasse selon l'invention ;
- la figure 2 est une vue schématique montrant une installation de séchage et de torréfaction de biomasse intégrant le réacteur selon l'invention et comprenant des circuits de fluide conformes à l'invention ;
- la figure 3 est une vue schématique en perspective d'un mode de réalisation du système de transfert et d'étanchéité du réacteur selon l'invention ;
- la figure 4 est un vue schématique en coupe longitudinale réalisée au nouveau d'un étage d'un réacteur selon l'invention constitué par un four à étages ;
- la figure 5 est un vue schématique en perspective d'une variante de réalisation d'un étage d'un réacteur selon l'invention constitué par un four à étages.

### EXPOSÉ DÉTAILLÉ DE MODES DE RÉALISATION PARTICULIERS

Dans la description qui va suivre les termes « entrée », « sortie », « amont », « aval » sont utilisés par référence avec la direction de transfert de la biomasse qui se fait verticalement du haut vers le bas. De même, les termes « supérieur », « inférieur », « au dessus », « au dessous » sont utilisés par référence à l'orientation physique verticale du réacteur de séchage et de torréfaction de biomasse selon l'invention.

Le réacteur de séchage et de torréfaction de biomasse ligno-cellulosique comprend une chambre 1 unique délimitée à sa périphérie cylindrique par une paroi latérale 10 et respectivement par le dessus et le dessous par deux parois horizontales 11, 12.

Deux zones distinctes 1A, 1B sont délimitées à l'intérieur de cette chambre, à savoir la zone amont 1A dans la partie supérieure de la chambre et une zone aval 1B dans la partie inférieure de la chambre.

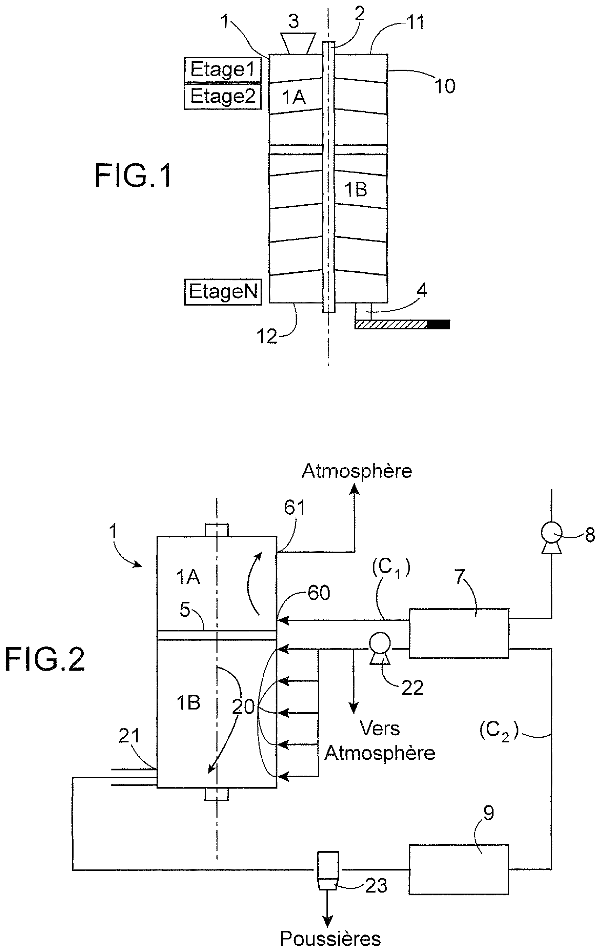

Tel qu'illustré en figure 1, le réacteur est de type four à étages et est donc constitué d'une série de plateaux Pi, également appelés soles, fixes dans la chambre 1, superposés verticalement les uns par rapport aux autres dans la paroi périphérique 10 qui est avantageusement une enveloppe d'acier thermiquement isolée. Chaque plateau fixe Pi définit un étage i.

Le réacteur comprend de moyens permettant d'assurer le brassage et le transfert de la biomasse d'une extrémité à l'autre de la chambre 1. Ici, un arbre 2 monté rotatif dans la chambre 1 et disposé selon son axe longitudinal du four supporte des bras munis d'une pluralité de pâles également connues sous le terme râbles. Ces pâles ou râbles permettent de brasser la biomasse introduite et de la déplacer selon une forme de spirale sur chaque plateau fixe, jusqu'à ce que celle-ci rencontre un orifice et tombe sur la sole du dessous.

La biomasse est ainsi introduite en haut du réacteur sur l'étage I grâce à un sas d'alimentation **3** dans la paroi horizontale supérieure 11. Ce sas 3 peut être un système à double clapets ou tout autre système permettant d'introduire la biomasse en continu tout en assurant l'étanchéité.

La biomasse ainsi introduite est râblée sur l'étage I au moyen des râbles jusqu'à ce qu'elle passe à travers une de ses ouvertures et est donc transférée par gravité sur l'étage inférieure II. Ainsi, la biomasse est transférée d'un étage donné à celui immédiatement en dessous, en se déplaçant de l'extrémité haute vers le bas de la chambre 1, où elle est extraite au niveau de la sortie 4 (système de sous-tirage de la biomasse traitée).

Le réacteur de séchage et de torréfaction selon l'invention comprend dans sa zone amont 1A des moyens permettant le séchage de la biomasse. En ce qui concerne le séchage, la température peut être comprise entre 100°C et 300°C, et plus particulièrement entre 100 et 200°C.

Dans sa zone aval 1B, le réacteur comprend des moyens permettant la torréfaction de la biomasse séché en amont. Dans cette zone aval où a lieu l'étape de torréfaction proprement dite, la température atteinte est comprise entre 200 et 300°C, et de préférence entre 250 et 300°C pour de la biomasse de type bois et entre 220 et 280°C pour de la biomasse de type agricole.

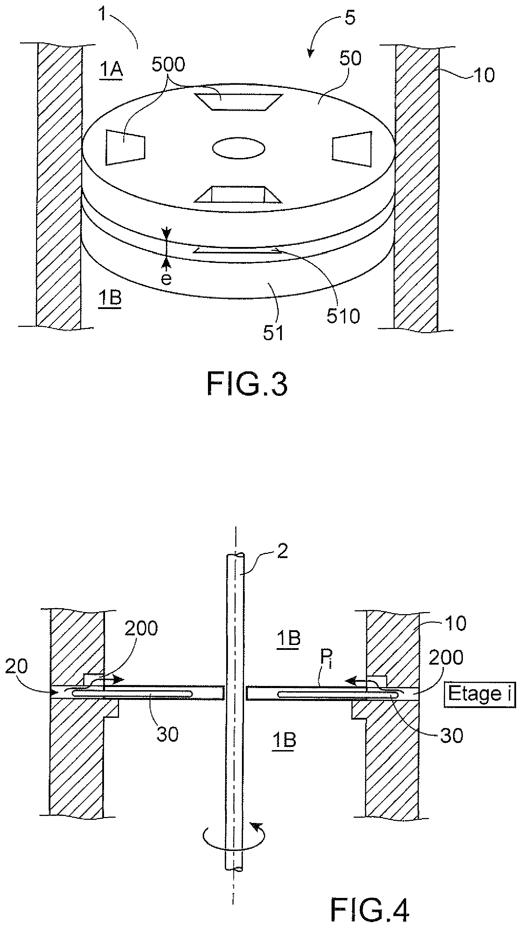

Selon l'invention, le réacteur comprend un système 5 de transfert et d'étanchéité apte à permettre le transfert de la biomasse séchée de la zone amont 1A à la zone aval 1B à intervalles de temps et à rendre étanche les deux zones entre elles pendant chaque intervalle. En figure 3, on a représenté un mode de réalisation avantageux de ce système 5 d'étanchéité et de transfert. Il s'agit une écluse rotative 5 comprenant :
- un plateau amont 50, monté fixe dans la chambre 1 et disposé en extrémité inférieure de la zone amont 1A, et comprenant une pluralité d'ouvertures 500 ;
- un plateau aval 51, monté fixe sur l'arbre central 2 rotatif dans la chambre et disposé en extrémité supérieure de la zone aval 1B, et comprenant également une pluralité d'ouvertures 510. Chaque ouverture 500 du plateau amont 50 est apte à être en regard d'une ouverture 510 du plateau aval 51 à intervalles de temps en fonction de la vitesse de rotation de l'arbre rotatif 2.

Tel qu'illustré, les ouvertures 500 et 510 sont toutes identiques entre elles et sont réparties avec le même nombre sur chaque plateau 50, 51. On veille à minimiser la distance, selon la hauteur de la chambre 1, entre le plateau amont fixe 50 et le plateau aval rotatif 51. En effet, minimiser cette distance permet de minimiser la quantité de gaz pouvant circuler de la zone amont 1A où se produit le séchage de la biomasse vers la zone aval 1B où se produit torréfaction proprement dite, et inversement. De préférence, cette distance est comprise entre 1 et 5 mm. Il va de soi que cette distance dépend de la biomasse à traiter : plus les particules sont grosses, plus la distance peut être élevée. Par exemple, des granulés du paille ont un diamètre rarement inférieur à 6 mm, et donc une distance séparant les deux plateaux 50, 51 d'au moins 6 mm est à prévoir dans le cas de traitement de granulés de paille.

A intervalles de temps, de préférence réguliers, lorsque les ouvertures 500 du plateau amont 50 sont en regard ou autrement dit à l'aplomb de celles 510 du plateau aval 51, alors la biomasse séchée tombe par gravité du plateau amont 50 à celui aval 51. Il va de soi qu'on veille à ce que des bras avec pâles contribuent à brasser la biomasse séchée sur le plateau amont 50. Ainsi, la biomasse ne circule à travers le système d'écluse rotatif 5 ainsi défini qu'à intervalles de temps prédéterminés, ce qui limite ainsi les communications entre les gaz de la zone amont 1A (séchage) et ceux de la zone aval 1B (torréfaction) ou autrement dit réalise l'étanchéité aux gaz entre les deux zones 1A et 1B de la chambre dans chaque intervalle de temps, c'est-à-dire lorsque les ouvertures 500 du plateau amont 50 ne sont pas en regard de celles 510 du plateau aval 51.

Par construction, il est avantageux de soutenir le plateau amont 50 par la paroi périphérique 10 du four.

On veille à dimensionner ce plateau amont 50 (son épaisseur ainsi que les dimensions des ouvertures 500) de sorte à avoir un débit déterminé de biomasse transférée de la zone amont 1A à la zone aval 1B. Par exemple, pour un débit visé de 3t/h de biomasse torréfié en sortie 4, ce qui correspond à environ 4t/h de biomasse séchée en entrée de la zone 1B, c'est-à-dire en sortie de la zone amont 1A, l'écluse rotative 5 doit être dimensionnée de façon a pourvoir permettre le transfert d'un débit de biomasse égal à 66 kg/min.

Typiquement, pour une biomasse de masse volumique égale à 300 kg/m³ et en prenant comme hypothèse que l'écluse 5 comprend :
- un plateau amont fixe 50 de l'ordre de 30 cm d'épaisseur avec un nombre égal à huit ouvertures 500,
- un plateau aval rotatif 51 comprenant le même nombre d'ouvertures 510 identiques à celles 500, et tournant à une vitesse de rotation égale à 1 environ rpm (rotation par minute), il faut prévoir une surface unitaire par ouverture 500, 510 de l'ordre de 1500 cm² pour permettre de laisser passer au moins 66 kg/min. Cette surface unitaire correspond à l'équivalent d'un carré de 38,7 cm de coté.

Comme indiqué ci-dessus, la vitesse de rotation de l'arbre peut être variable et adaptée en fonction du débit de biomasse que l'on cherche à transférer à travers l'écluse rotative 5. Typiquement, on envisage des vitesses de rotation de l'arbre centrales 2 comprises entre 0,2 et 2 rpm.

Une installation de séchage et de torréfaction intégrant un réacteur selon l'invention comprend avantageusement deux circuits de fluide C1, C2 indépendants.

Le premier circuit de fluides C1 est celui qui amène la chaleur nécessaire au séchage de la biomasse dans la zone amont 1A. Selon l'invention, de l'air chauffé comme expliqué ci-après dans l'échangeur de chaleur 7 est injecté en extrémité inférieure dans une ouverture 60 traversant la paroi périphérique 10. Grâce à un ventilateur 8 l'air circule à contre courant avec la biomasse dans la zone amont 1A et est ensuite rejetée de cette zone amont 1A à l'atmosphère par l'ouverture 61 traversant la paroi périphérique 10 en en extrémité supérieure. Cette circulation d'air chauffé aux températures de séchage typiquement comprises entre 100 et 200°C, à contre-courant de la biomasse transférée verticalement quant à elle du haut vers le bas est schématisée par la flèche recourbée en zone 1A de la figure 2.

Le deuxième circuit de fluides C2 est celui qui amène la chaleur nécessaire à la torréfaction : cette chaleur est apportée par les gaz issus d'une chambre de combustion 9 distincte de la chambre de réacteur 1, après un passage dans l'échangeur de chaleur 8. Ceux-ci circulent dans le four à co-courant avec la biomasse et sont injectés sur chaque étage du four dans la zone aval 1B du réacteur à travers un système d'injection 20. La circulation des gaz issus de la combustion aux températures de torréfaction typiquement comprises entre 200 et 300°C, à co-courant de la biomasse transférée verticalement quant à elle du haut vers le bas est schématisée par la flèche recourbée en zone 1B de la figure 2.

Un système d'injection 20 peut être constitué d'une ou plusieurs ouvertures pratiquées à travers la paroi périphérique 10 du four d'un orifice permettant aux gaz issus de la combustion d'entrer dans la zone aval 1B du four. On peut prévoir de réaliser un système d'injection 20 au niveau de chaque étage du four à étages multiples.

Dans ce deuxième circuit de fluides, les fumées composées des gaz introduits dans le four dans la zone aval 1B par le système d'injection 20, et donc au moins ceux issus de la combustion dans la chambre de combustion 9 ainsi que des gaz dégagés par la biomasse sous l'effet du traitement thermique de torréfaction sont récupérées en extrémité inférieure de la chambre 1 du réacteur. Plus exactement, on prévoit une ouverture traversant la paroi périphérique 10 au niveau du dernier étage N, et de préférence débouchant dans un conduit formant une cheminée 21. La circulation des fumées (gaz) en sortie du four est réalisée grâce à un ventilateur 22, placé en aval de l'échangeur de chaleur 7, comme monté en figure 2. Un tel agencement du ventilateur permet d'éviter que celui-ci soit encrassé par les goudrons présents en sotie de la cheminée 21. De préférence, le deuxième circuit de fluides C2 comprend entre la cheminée 21 et la chambre de combustion 9 un séparateur cyclonique 23 qui permet d'éliminer toutes les particules volatiles de taille importante, typiquement de quelques millimètres, et qui sont susceptibles d'encrasser les équipements. Afin d'éviter les phénomènes de condensation dans le séparateur cyclonique, celui-ci peut être avantageusement maintenu en température par les fumées rejetées à l'atmosphère en sortie du ventilateur 22. De plus, les poussières extraites au niveau du séparateur cyclonique 23 peuvent être valorisées au niveau de la chambre de combustion 9 dans le brûleur multi combustible avec la biomasse. On précise ici qu'un séparateur cyclonique 23 comprend un ou plusieurs cyclones. Ces cyclones sont au sens technologique du terme des séparateurs de particules à effet centrifuge : ils permettent de donner au gaz un mouvement de rotation. Par effet centrifuge, les particules dans le gaz vont se déplacer vers les parois du cyclone où elles seront collectées.

En sortie de la cheminée 21, les fumées sont ensuite dirigées vers la chambre de combustion 9 où leur capacité calorifique est valorisée par combustion. Cette chambre de combustion 9 comprend avantageusement au moins un brûleur multi combustibles non représenté : on peut ainsi réaliser un apport d'énergie par injection d'une matière solide combustible complémentaire. Il peut d'ailleurs s'agir de biomasse ou du charbon de bois couplé à une injection d'air de combustion. Ces combustibles solides présentent les avantages d'être facilement stockables et transportables, ce qui permet d'assurer l'indépendance énergétique du réacteur selon l'invention lorsqu'il est utilisé en tant qu'unité de torréfaction transportable jusqu'à des zones géographiquement isolées. La chambre de combustion 9 peut également être utilisée comme chambre de postcombustion si la législation en vigueur nécessite un traitement des fumées avant rejet à l'atmosphère.

Dans l'hypothèse où une fois brûlés dans la chambre de post combustion 9, les gaz sont toujours chargés de composés tels que des oxydes de souffre ou encore des gaz acides et aérosols acides (HCl, HF...), dont la quantité ne respecte pas la législation en vigueur, alors on envisage un ou des traitements supplémentaires. Ce(s) traitement(s) supplémentaire(s) peu(ven)t par exemple être un traitement à la chaux ou sur charbon actif (pour la désulfurisation) ou une neutralisation.

En sortie de la chambre de combustion 9, les fumées sont envoyées vers l'échangeur de chaleur 7 où elles vont apporter l'énergie nécessaire au séchage en zone amont 1A par l'intermédiaire de l'air circulant dans le premier circuit de fluides C1.

Comme montré sur la figure 2, une partie des fumées, en sortie de l'échangeur de chaleur 7, est ensuite envoyée au niveau du système d'injection 20 présents sur chaque étage de la zone aval 1B, i-e la zone de torréfaction du four, le reste des fumées est dirigé le cas échéant vers une zone de traitement appropriée, avant d'être rejetée à l'atmosphère.

Comme indiqué ci-dessus, afin d'assurer un contrôle fin de la température et de l'homogénéiser dans la zone de torréfaction (zone aval 1B), le système d'injection 20 permet d'injecter une partie des gaz de torréfaction recyclés par combustion préalable dans la chambre de combustion 9 de préférence à chaque étage du four.

Pour encore mieux contrôler la température et l'homogénéiser, on prévoit avantageusement que le système d'injection 20 soit couplé à un système d'optimisation des échanges thermiques. Ce dernier est composé d'un élément caloduc reliant la paroi périphérique 10 du four et chaque plateau Pi définissant un étage i du four. Ainsi, comme mieux illustré en figure 4, à chaque étage i de la zone 1B du four, les gaz issus de la combustion sont injectés à travers une ouverture 200 du système d'injection à proximité d'un élément caloduc 30. Les gaz sont ainsi mis en contact avec le caloduc 30 avant d'être envoyés sur chaque plateau Pi. Afin de donner une impulsion tangentielle aux gaz au niveau d'une ouverture d'injection 200 et ainsi favoriser le mouvement de rotation dans le four, on peut envisager de mettre en oeuvre des moyens supplémentaires tels qu'une orientation déterminée par construction de l'ouverture d'injection 200, une canne, une plaque métallique formant un déflecteur.

Ainsi, chaque plateau Pi est chauffé par les gaz chauds arrivant par une ouverture d'injection 200 à chaque étage i et qui diffuse cette chaleur vers le centre de la chambre du four. L'introduction d'éléments caloducs 30 au niveau de chaque étage i du four permet de maintenir la température des plateaux fixes Pi constante et homogène. Ainsi, la température des gaz et des plateaux est précisément maîtrisée et les échanges thermiques avec le lit de particules de biomasse en transfert sont contrôlés et optimisés par maximisation de la surface d'échange.

En ce qui concerne le choix du fluide caloporteur des caloducs selon l'invention, les inventeurs ont fait l'inventaire de ceux actuellement connus. Le tableau 2 récapitulatif extrait de la publication [1] donne une vue exhaustive. Dans le cadre de l'invention, les inventeurs pensent que le Gilotherm® DO et le Naphtalène sont les mieux adaptés pour répondre aux conditions opératoires du réacteur selon l'invention. Bien entendu, l'homme de l'art pourra choisir d'autres fluides caloporteurs dans les caloducs avec d'autres matériaux de chambre en fonction des applications envisagées (type de biomasse à traiter).

L'enveloppe utilisée d'un réacteur selon l'invention est typiquement en acier ou acier inoxydable (304 L). Avec les fluides caloporteurs envisagés pour les caloducs selon l'invention, les échanges de chaleur par changement de phase sont très supérieurs à la conduction classique. Ainsi, à titre de comparaison, le cuivre connu comme un très bon conducteur thermique, présente un coefficient de conductivité thermique de l'ordre de 360 W/m.°C, ce qui ne permet d'atteindre des flux de chaleur dans un rapport de dix fois plus faible que le Naphtalène diphasique envisagé pour les caloducs selon l'invention.

Les caloducs 30 placés au niveau de chaque étage dans les plateaux Pi peuvent avoir une longueur équivalente au rayon du plateau et un diamètre de préférence compris entre 30 mm et 80 mm.

Grâce aux caloducs 30 et l'augmentation maîtrisée de la température couplée à une optimisation des échanges de chaleur afférente, les inventeurs pensent que l'on peut envisager un temps de séjour de biomasse dans le réacteur considérablement réduits. En effet, le couple temps de séjour/température conditionne la perte de masse de la matière solide et le niveau de dégradation des composés de la biomasse.

Une augmentation de la température permet ainsi de diminuer le temps de séjour. En outre, lorsqu'on envisage une alimentation en biomasse en continu, continue, il est également nécessaire d'avoir des échanges de chaleur optimisés pour que le traitement thermique reste homogène dans une utilisation à haute température et faible temps de séjour.

Jusqu'à présent, usuellement, des temps de séjour sont typiquement compris entre 20 et 90 min uniquement pour la torréfaction. Les inventeurs pensent que le temps de séjour de la biomasse pour le séchage et la torréfaction pourraient être de 10 à 30 min dans un réacteur selon l'invention.

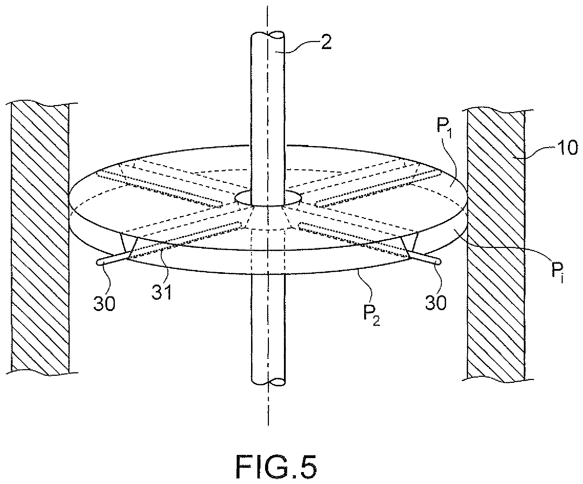

On a représenté en figure 5, un montage avantageux de plusieurs éléments caloduc 30 selon l'invention dans un plateau fixe définissant un étage i du réacteur (four à étages) selon l'invention.

Dans le montage représenté, un plateau Pi est constitué de deux plaques P1, P2 écartées l'une de l'autre par une entretoise 31 dont la gorge interne est en forme de V. La plaque inférieure P2 assure essentiellement une fonction de soutien du plateau et des caloducs 30 sur la paroi périphérique du four.

Comme visible sur cette figure 5, il y a des moyens de chauffage comprenant quatre éléments caloducs 30 identiques agencés chacun sur un rayon des plaques P1, P2 et à 90° l'un de l'autre. Chaque élément caloduc 30 est inséré dans une gorge de l'entretoise 31 en V. On peut ainsi réaliser le montage et démontage aisé de chaque caloduc 30. Pour une optimisation de la température, il peut également être envisagé d'ajouter des caloducs dans la paroi périphérique du four. Dans ce cas, les éléments caloducs peuvent être avantageusement placés verticalement entre l'enveloppe du réacteur et l'isolant thermique usuellement prévu à l'arrière. On peut envisage de fixer les éléments caloducs à l'aide de pontets visés ou soudés sur l'extérieur de l'enveloppe du réacteur. On peut également envisager de fixer ces éléments caloducs à l'aide d'une technique de projection métallique.

Une telle technique, tout comme des gorges en forme de V permet de mettre en oeuvre une surface de contact thermique et donc d'échange thermique importante entre les éléments caloducs et le plateau.

Le réacteur de séchage et de torréfaction selon l'invention qui vient d'être décrit présente de nombreux avantages et permet son utilisation en tant qu'unité transportable jusqu'à des zones géographiquement isolées.

A titre d'exemple, les inventeurs envisagent pour une réacteur selon l'invention utilisable en tant qu'unité de torréfaction transportable d'une capacité de 3t/h de biomasse torréfiée, un apport compris entre 1000 et 3000 kJ/kg de biomasse qui permet de produire une biomasse ayant un pouvoir calorifique inférieur compris entre 20 et 25 MJ/kg. Il va de soi que ce ratio varie en fonction de l'humidité initiale de la biomasse et de la capacité du four.

D'autres modes de réalisation peuvent être envisagés sans pour autant sortir du cadre de l'invention. Ainsi, si le nombre de plateaux actuellement envisagés dans un réacteur de type à soles multiples selon l'invention, tel que représenté en figure 1 est de deux pour la zone amont dédiée au séchage et de quatre pour la zone aval dédiée à la torréfaction, soit un nombre total de six plateaux fixes, on peut très bien envisager un nombre différent de plateaux fixes. Par exemple, si la biomasse en entrée présente un taux d'humidité très élevé, on peut envisager un nombre supérieur de plateaux dans la zone amont de séchage, typiquement un nombre égal à trois.

L'intégration des éléments caloducs selon l'invention peut se faire uniquement dans la zone aval dédiée à la torréfaction mais elle peut également se faire dans la zone amont dédiée au séchage.

Le réacteur peut ainsi comprendre des moyens de chauffage dans la zone de séchage ou des moyens de chauffage dans la zone de torréfaction ou des moyens de chauffage dans la zone de séchage et de torréfaction.

On envisage préférentiellement d'intégrer ces éléments caloducs dans la zone aval car le contrôle de la température de torréfaction est plus important, le traitement de torréfaction étant par nature plus sensible à de faibles variations de température que ne l'est le séchage proprement dit.

### Références citée

[1] : *Caloduc* - Techniques de l'ingénieur [B9 545]

## Revendications

1. Réacteur de séchage et torréfaction, destiné à la torréfaction de biomasse formé d'un four à étages, le réacteur comprenant une chambre (1) à l'intérieur de laquelle sont délimitées deux zones distinctes et des moyens pour brasser et transférer de la biomasse d'une extrémité à l'autre de la chambre, la zone amont (1A) de la chambre comprenant des moyens de séchage aptes à réaliser le séchage de la biomasse introduite dans le réacteur, la zone aval (1B) de la chambre comprenant des moyens de torréfaction aptes à réaliser la torréfaction de la biomasse séchée dans la zone amont, le réacteur comprenant un système (5) de transfert et d'étanchéité apte à permettre le transfert de la biomasse séchée de la zone amont à la zone aval à intervalles de temps et à rendre étanche les deux zones (1A, 1B) entre elles pendant chaque intervalle, le réacteur comprenant des moyens de chauffage au niveau de la zone de torréfaction et/ou de la zone de séchage, les moyens de chauffage étant dotés d'un ou plusieurs caloducs, pour chauffer un plateau fixe dans la chambre définissant un étage d'un four à étages.

2. Réacteur de séchage et torréfaction selon la revendication 1, constitué d'un four à étages avec chaque étage i défini par un plateau fixe (Pi) dans lequel est pratiquée au moins une ouverture, dite ouverture de transfert, les moyens de brassage et de transfert de la biomasse étant constitués par une pluralité de bras munis de pâles aptes à brasser et déplacer la biomasse sur chaque plateau fixe selon une trajectoire en spirales jusqu'à l'ouverture de transfert à travers laquelle la biomasse peut s'écouler par gravité.

3. Réacteur de séchage et torréfaction selon la revendication 2, l'élément caloduc (30) étant maintenu à l'intérieur d'une gorge (31) en forme de V pratiquée dans un plateau fixe définissant un étage dudit four.

4. Réacteur de séchage et torréfaction selon la revendication 3, un plateau fixe Pi est formé de deux plaques (P1, P2) superposées l'une sur l'autre et distantes l'une de l'autre par une entretoise en forme de V dont l'intérieur constitue la gorge.

5. Réacteur de séchage et torréfaction selon l'une des revendications précédentes, dans lequel le système de transfert et d'étanchéité est une écluse rotative (5) comprenant :
- un plateau amont (50), monté fixe dans la chambre et disposé en extrémité inférieure de la zone amont, et comprenant au moins une ouverture (500), dite ouverture de transfert ;
- un plateau aval (51), monté fixe sur un arbre lui-même monté rotatif dans la chambre et disposé en extrémité supérieure de la zone aval, et comprenant également au moins une ouverture (510), dite ouverture de transfert ;
dans laquelle une ouverture de transfert du plateau amont est apte à être en regard d'une ouverture de transfert du plateau aval à intervalles de temps en fonction de la vitesse de rotation de l'arbre rotatif.

6. Installation de traitement de biomasse comprenant un réacteur selon l'une quelconque des revendications précédentes, comprenant un premier circuit de fluides (C1) avec des moyens (8, 60, 61) pour respectivement injecter de l'air ou vapeur d'eau en extrémité inférieure de la zone amont, faire circuler l'air ou la vapeur d'eau injectée en contre-courant de la biomasse dans la zone amont, la récupérer à son extrémité supérieure, et la rejeter à l'atmosphère .

7. Installation de traitement de biomasse selon la revendication 6, les moyens (8, 60, 61) comprenant au moins une ouverture (60), dite ouverture d'injection, pratiquée dans la paroi périphérique (10) du réacteur en extrémité inférieure de la zone amont, au moins un ventilateur (8) apte à faire circuler faire circuler l'air ou la vapeur d'eau injectée en contre-courant de la biomasse dans la zone amont, au moins une ouverture (61), dite ouverture de rejet, pratiquée dans la paroi périphérique du réacteur en extrémité inférieure de la zone amont.

8. Installation de traitement de biomasse selon l'une des revendications 6 ou 7, comprenant un deuxième circuit fluide (C2) avec des moyens (21, 22, 9, 20) pour respectivement récupérer les gaz en extrémité inférieure de la zone aval, faire une combustion des gaz récupérés, ré-injecter au moins une partie des gaz issus de la combustion en extrémité supérieure de la zone aval et faire circuler les gaz en co-courant de la biomasse dans la zone aval.

9. Installation de traitement de biomasse selon la revendication 8, les moyens (21, 22, 9, 20) comprenant au moins une ouverture, dite ouverture de récupération (21), pratiquée dans la paroi périphérique du réacteur en extrémité inférieure de la zone aval, une chambre de combustion (9) distincte de la chambre de réacteur, au moins un ventilateur (22) pour faire circuler les gaz en co-courant de la biomasse dans la zone aval, au moins une ouverture, dite ouverture de ré-injection (200), pratiquée dans la paroi périphérique de la chambre en extrémité supérieure de la zone aval.

10. Installation de traitement de biomasse selon la revendication 9, la chambre de combustion (9) comprenant au moins un brûleur multi-combustible pour brûler simultanément les gaz récupérés en extrémité inférieure de la zone aval et des combustibles de matière solide.

11. Installation de traitement de biomasse selon l'une des revendications 1 à 10, comprenant au moins une ouverture de réinjection (200) à chaque étage du four dans la zone aval.

12. Installation de traitement de biomasse selon la revendication 11, chaque ouverture de réinjection (200) étant pratiquée à proximité de chaque caloduc (30) maintenu dans un plateau fixe.

13. Installation de traitement de biomasse selon l'une des revendications 8 à 10, comprenant un échangeur de chaleur (7) pour permettre le chauffage du premier circuit de fluide par le deuxième circuit de fluide.

## Patentansprüche

1. Reaktor zum Trocknen und Torrefizieren, der für die Torrefizierung von Biomasse ausgelegt ist, und der mit einem Etagenofen gebildet ist, wobei der Reaktor eine Kammer (1) umfasst, in deren Inneren zwei getrennte Zonen begrenzt sind, sowie Mittel zum Umrühren und Transferieren der Biomasse von einem Ende der Kammer zum anderen, wobei die stromaufwärtige Zone (1A) der Kammer Trocknungsmittel umfasst, die dazu ausgelegt sind, die Trocknung der in den Reaktor eingebrachten Biomasse zu realisieren, wobei die stromabwärtige Zone (1B) der Kammer Torrefizierungsmittel umfasst, die dazu ausgelegt sind, die Torrefizierung der Biomasse zu realisieren, die in der stromaufwärtigen Zone getrocknet ist, wobei der Reaktor ein Transfer- und Abdichtungssystem (5) umfasst, das dazu ausgelegt ist, den Transfer der getrockneten Biomasse von der stromaufwärtigen Zone zur stromabwärtigen Zone in Zeitintervallen zu ermöglichen und die zwei Zonen (1A, 1B) gegeneinander während jedes Intervalls abzudichten, wobei der Reaktor Heizmittel im Bereich der Torrefizierungszone und/oder der Trocknungszone umfasst, wobei die Heizmittel mit einem oder mehreren Wärmeleitern versehen sind, um eine feste Platte in der Kammer zu heizen, die eine Etage eines Etagenofens definiert.

2. Reaktor zum Trocknen und Torrefizieren nach Anspruch 1, der mit einem Etagenofen gebildet ist, wobei jede Etage i durch eine feste Platte (Pi) definiert ist, in der wenigstens eine Öffnung, genannt Transferöffnung, ausgebildet ist, wobei die Mittel zum Umrühren und Transferieren der Biomasse durch eine Mehrzahl von Armen gebildet sind, die mit Schaufeln ausgestattet sind, die dazu ausgelegt sind, die Biomasse auf jeder festen Platte umzurühren und entlang einer Spiraltrajektorie bis zur Transferöffnung zu verlagern, durch die die Biomasse durch Gravitation abfließen kann.

3. Reaktor zum Trocknen und Torrefizieren nach Anspruch 2, wobei das Wärmeleiterelement (30) im Inneren einer V-förmigen Kehle (31) gehalten ist, die in einer festen Platte ausgebildet ist, die eine Etage des Ofens definiert.

4. Reaktor zum Trocknen und Torrefizieren nach Anspruch 3, wobei eine feste Platte Pi mit zwei Platten (P1, P2) gebildet ist, die einander überlagert sind und voneinander durch einen V-förmigen Abstandshalter beabstandet sind, dessen Inneres die Kehle bildet.

5. Reaktor zum Trocknen und Torrefizieren nach einem der vorhergehenden Ansprüche, bei dem das Transfer- und Abdichtungssystem eine Drehschleuse (5) ist, umfassend:
- eine stromaufwärtige Platte (50), die fest in der Kammer montiert und am unteren Ende der stromaufwärtigen Zone angeordnet ist, und die wenigstens eine Öffnung (500) umfasst, genannt Transferöffnung;
- eine stromabwärtige Platte (51), die fest auf einer Welle montiert ist, die selbst wiederum drehbar in der Kammer montiert ist und am oberen Ende der stromabwärtigen Zone angeordnet ist, und die ebenfalls wenigstens eine Öffnung (510) umfasst, genannt Transferöffnung;
wobei eine Transferöffnung der stromaufwärtigen Platte dazu ausgelegt ist, einer Transferöffnung der stromabwärtigen Platte in Zeitintervallen als Funktion der Drehgeschwindigkeit der Drehwelle gegenüber zu liegen.

6. Anlage zur Behandlung von Biomasse, umfassend einen Reaktor nach einem der vorhergehenden Ansprüche, umfassend einen ersten Fluidkreislauf (C1) mit Mitteln (8, 60, 61) zum Injizieren von Luft beziehungsweise von Wasserdampf am unteren Ende der stromaufwärtigen Zone, zum Zirkulierenlassen der injizierten Luft oder des injizierten Wasserdampfs im Gegenstrom zur Biomasse in der stromaufwärtigen Zone, zum Auffangen derselben an ihrem oberen Ende und zum Ausstoßen derselben an die Atmosphäre.

7. Anlage zur Behandlung von Biomasse nach Anspruch 6, wobei die Mittel (8, 60, 61) wenigstens eine Öffnung (60) umfassen, genannt Injektionsöffnung, die in der Umfangswand (10) des Reaktors am unteren Ende der stromaufwärtigen Zone ausgebildet ist, wenigstens einen Ventilator (8), der dazu ausgelegt ist, die injizierte Luft oder den injizierten Wasserdampf im Gegenstrom zur Biomasse in der stromaufwärtigen Zone zirkulieren zu lassen, und wenigstens eine Öffnung (61), genannt Ausstoßöffnung, die in der Umfangswand des Reaktors am unteren Ende der stromaufwärtigen Zone ausgebildet ist.

8. Anlage zur Behandlung von Biomasse nach einem der Ansprüche 6 oder 7, umfassend einen zweiten Fluidkreislauf (C2) mit Mitteln (21, 22, 9, 20), um jeweils die Gase am unteren Ende der stromabwärtigen Zone aufzusammeln, eine Verbrennung der aufgesammelten Gase durchzuführen, wenigstens einen Teil der aus der Verbrennung hervorgehenden Gase wieder am oberen Ende der stromabwärtigen Zone zu injizieren, und die Gase im Gegenstrom zur Biomasse in der stromabwärtigen Zone zirkulieren zu lassen.

9. Anlage zur Behandlung von Biomasse nach Anspruch 8, wobei die Mittel (21, 22, 9, 20) wenigstens eine Öffnung umfassen, genannt Rekuperationsöffnung (21), die in der Umfangswand des Reaktors am unteren Ende der stromabwärtigen Zone ausgebildet ist, eine von der Kammer des Reaktors getrennte Brennkammer (9), wenigstens einen Ventilator (22), um die Gase im Gegenstrom zur Biomasse in der stromabwärtigen Zone zirkulieren zu lassen, wenigstens eine Öffnung, genannt Reinjektionsöffnung (200), die in der Umfangswand der Kammer am oberen Ende der stromabwärtigen Zone ausgebildet ist.

10. Anlage zur Behandlung von Biomasse nach Anspruch 9, wobei die Brennkammer (9) wenigstens einen Multibrennstoffbrenner umfasst, um gleichzeitig die am unteren Ende der stromabwärtigen Zone rekuperierten Gase und Brennstoffe aus festem Material zu verbrennen.

11. Anlage zur Behandlung von Biomasse nach einem der Ansprüche 6 bis 10, umfassend wenigstens eine Reinjektionsöffnung (200) bei jeder Etage des Ofens in der stromabwärtigen Zone.

12. Anlage zur Behandlung von Biomasse nach Anspruch 11, wobei jede Reinjektionsöffnung (200) in der Nähe jedes Wärmeleiters (30) ausgebildet ist, gehalten in einer festen Platte.

13. Anlage zur Behandlung von Biomasse nach einem der Ansprüche 8 bis 10, umfassend einen Wärmetauscher (7), um ein Heizen des ersten Fluidkreislaufs durch den zweiten Fluidkreislauf zu ermöglichen.

## Claims

1. A reactor for drying and torrefaction, intended for torrefying biomass, formed of a multiple-stage furnace, the reactor including a chamber (1) within which two separate areas are delimited, together with means to mix and transfer biomass from one end of the chamber to the other, where the upstream area (1A) of the chamber includes drying means able to dry the biomass introduced into the reactor, where the downstream area (1B) of the chamber includes torrefaction means able to torrefy the biomass dried in the upstream area, where the reactor includes a transfer and sealing system (5) able to transfer dried biomass from the upstream area to the downstream area at time intervals and to make the two areas (1A, 1B) mutually sealed during this time interval, and where the reactor includes heating means in the torrefaction and/or drying area, the heating means including one or more heat pipe element (30) for heating a fixed platform (Pi) in the chamber defining a stage i of a multiple-stage furnace.

2. A reactor for drying and torrefaction according to claim 1, consisting of a multiple-stage furnace where each stage i is defined by a fixed platform (Pi) in which at least one opening is made, called the transfer opening, where the means for mixing and transferring the biomass consist of multiple arms fitted with vanes able to mix and move the biomass on each fixed platform along a spiral-shaped trajectory as far as the transfer opening through which the biomass can flow under gravity.

3. A reactor for drying and torrefaction according to claim 2, where the heat pipe element (30) is held inside a V-shaped groove (31) made in at least one fixed platform defining a stage of said furnace.

4. A drying and torrefaction reactor according to claim 3, where a fixed platform Pi is formed from two plates (P1, P2) superposed on one another and separated from one another by a V-shaped brace the interior of which constitutes the groove.

5. A reactor for drying and torrefaction according to one of the previous claims, in which the transfer and sealing system is a rotary feeder (5) including:
- an upstream platform (50), fixedly mounted in the chamber, and positioned at the lower end of the upstream area, and including at least one opening (500), called a transfer opening;
- a downstream platform (51), fixedly mounted on a shaft, which is itself installed such that it can rotate in the chamber, and positioned at the upper end of the downstream area, and also including at least one opening (510), called a transfer opening;
in which a transfer opening of the upstream platform can face a transfer opening of the downstream platform at time intervals which are dependent on the speed of rotation of the rotary shaft.

6. A biomass treatment installation including a reactor according to any one of the previous claims, including a first fluid circuit (C1), with means (8, 60, 61) respectively to inject air or steam at the lower end of the upstream area, to cause the air or the injected steam to flow against the current of the biomass in the upstream area, to recover it at its upper end, and to discharge it into the atmosphere.

7. A biomass treatment installation according to claim 6, where the means (8, 60, 61) include at least one opening (60), called the injection opening, made in the peripheral wall (10) of the reactor at the lower end of the upstream area, at least one ventilator (8) able to cause the air or injected steam to flow against the current of the biomass in the upstream area, and at least one opening (61), called the discharge opening, made in the peripheral wall of the reactor at the lower end of the upstream area.

8. A biomass treatment installation according to either of claims 6 or 7, including a second fluid circuit (C2) with means (21, 22, 9, 20) respectively to recover the gases at the lower end of the downstream area, to cause combustion of the recovered gases, to reinject at least a proportion of the combustion gases into the upper end of the downstream area, and to cause the gases to flow with the current of the biomass in the downstream area.

9. A biomass treatment installation according to claim 8, where the means (21, 22, 9, 20) include at least one opening, called the recovery opening (21), made in the peripheral wall of the reactor at the lower end of the downstream area, a combustion chamber (9) separate from the reactor chamber, at least one ventilator (22) to cause the gases to flow with the current of the biomass in the downstream area, and at least one opening, called the re-injection opening (200), made in the peripheral wall of the chamber at the upper end of the downstream area.

10. A biomass treatment installation according to claim 9, where the combustion chamber (9) includes at least one combination burner to burn simultaneously the gases recovered at the lower end of the downstream area, and solid material fuels.

11. A biomass treatment installation according to any of the claims 6 to 10, including at least one reinjection opening (200) at each stage of the furnace in the downstream area.

12. A biomass treatment installation according to claim 11, wherein each reinjection opening (200) is made close to each heat pipe (30) held in a fixed platform.

13. A biomass treatment installation according to either of claims 8 to 10, including a heat exchanger (7) to enable the first fluid circuit to be heated by the second fluid circuit.
